# EUROPEAN PATENT SPECIFICATION

(11) **EP 4 250 440 B1**
(45) Date of publication and mention of the grant of the patent: **10.09.2025**
(21) Application number: 21894586.3
(22) Date of filing: 15.11.2021
(51) Int. Cl.: H01M 50/107, H01M 50/167, H01M 50/55

(54) **CYLINDRICAL BATTERY**
ZYLINDRISCHE BATTERIE
BATTERIE CYLINDRIQUE

(30) Priority: 19.11.2020 JP 2020192302
(43) Date of publication of application: 27.09.2023
(73) Proprietor: Panasonic Energy Co., Ltd., Moriguchi-shi, Osaka, 570-8511 (JP)
(72) Inventor: HARAGUCHI, Shin, Kadoma-shi, Osaka 571-0057 (JP)
(74) Representative: Novagraaf International SA
(86) International application number: PCT/JP2021/041862
(87) International publication number: WO 2022/107712

(56) References cited:
- WO-A1-2020/111275
- JP-A- 2020 518 976
- US-A1- 2019 296 311

## Description

### TECHNICAL FIELD

The present disclosure relates to a cylindrical battery.

### BACKGROUND

Conventionally, a cylindrical battery formed by housing an electrode assembly in a bottomed cylindrical outer can and closing the opening of the outer can with a sealing assembly has been widely known (see, for example, Patent Literature 1 and 2). Typically, the outer can has a grooved portion where a part of a side surface protrudes inward, and, by bending an opening end portion of the outer can inward and vertically compressing a gasket interposed between the grooved portion and the opening end portion, the sealing assembly is crimped and fixed. Further, a positive electrode lead and a negative electrode lead protrude respectively from a positive electrode and a negative electrode included in the electrode assembly. For example, the sealing assembly is connected to the positive electrode lead and serves as a positive electrode external terminal, while the outer can is connected to the negative electrode lead and serves as a negative electrode external terminal.

### CITATION LIST

### PATENT LITERATURE

PATENT LITERATURE 1: Japanese Unexamined Patent Application Publication No. 2009-152031
PATENT LITERATURE 2: Japanese Unexamined Patent Application Publication No. 2010-512638
Document JP2020518976A discloses a cylindrical battery known in the art.

### SUMMARY

### TECHNICAL PROBLEM

When connecting a plurality of cylindrical batteries to form a battery module, external leads are connected to the respective sealing assemblies and outer cans, and by means of the external leads, the plurality of cylindrical batteries are connected to each other. In order to reduce the distance of connection between the batteries, there are cases where each external lead is connected to the opening end portion, which is located on the battery sealing assembly side, of an outer can, and to the sealing assembly of an adjacent battery. In a conventional battery, the opening end portion of the outer can has a short length, so that workability in connecting an external lead to the opening end portion is poor. Further, when an attempt is made to improve the workability by forming the opening end portion to have a greater length, the opening end portion cannot be caused to uniformly compress the gasket, and wrinkles and corrugations occur, resulting in poor flatness at the opening end portion. Consequently, it is not possible to stably connect an external lead to the opening end portion serving as an external terminal.

In view of the above, the present disclosure is directed to providing a cylindrical battery having, at the opening end portion of the outer can, an external terminal which has a polarity different from that of the sealing assembly and which is easily connected to an external lead.

### SOLUTION TO PROBLEM

A cylindrical battery according to one aspect of the present disclosure includes: an electrode assembly including a positive electrode and a negative electrode; a bottomed cylindrical outer can which houses the electrode assembly and which is connected to one of the positive electrode and the negative electrode; and a sealing assembly connected to the other one of the positive electrode and the negative electrode. The outer can has a grooved portion, and an opening end portion extending radially outward. The sealing assembly is fixed by being crimped, via a gasket, between a pressing member joined to the opening end portion and the grooved portion.

### ADVANTAGEOUS EFFECTS OF INVENTION

According to the cylindrical battery according to one aspect of the present disclosure, the opening end portion is extended radially outward, and the pressing member is joined to the opening end portion. By connecting an external lead to the pressing member or a flat surface of the opening end portion, the pressing member or the opening end portion functions as an external terminal having a polarity different from that of the sealing assembly. As compared to an opening end portion of an outer can of a conventional cylindrical battery, the pressing member and the opening end portion according to one aspect of the present disclosure easily provides sufficient flatness and area. Accordingly, at the opening end portion of the outer can, it is possible to form an external terminal which has a polarity different from that of the sealing assembly and which facilitates connection of an external lead.

### BRIEF DESCRIPTION OF DRAWINGS

[FIG. 1] FIG. 1 is a vertical cross-sectional view of a cylindrical battery according to an example embodiment.
[FIG. 2] FIG. 2 is an enlarged view of a part of an upper end portion of an outer can of FIG. 1.
[FIG. 3] FIG. 3 is a view corresponding to FIG. 2, showing another example embodiment.

### DESCRIPTION OF EMBODIMENTS

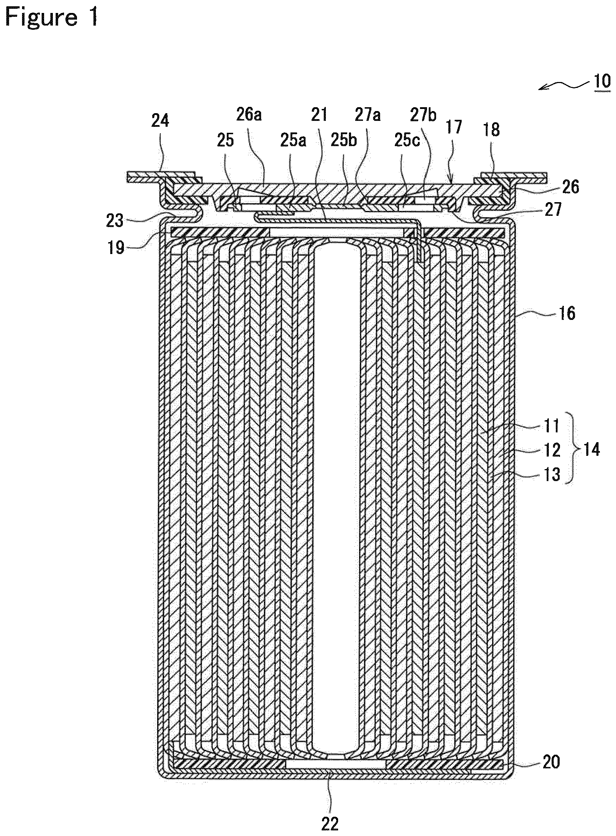

An example embodiment of a cylindrical battery according to the present disclosure will now be described in detail by reference to the drawings. FIG. 1 is a vertical cross-sectional view of a cylindrical battery 10 according to the example embodiment.

As shown in FIG. 1, the cylindrical battery 10 comprises an electrode assembly 14, a bottomed cylindrical outer can 16 that houses the electrode assembly 14 and an electrolyte (not shown in drawing), and a sealing assembly 17 that closes an opening of the outer can 16 via a gasket 18. The electrode assembly 14 includes a positive electrode 11, a negative electrode 12, and a separator 13, and has a structure in which the positive electrode 11 and the negative electrode 12 are wound in a spiral shape with the separator 13 interposed between the electrodes 11, 12. In the following description, for convenience of explanation, a direction along the axial direction of the outer can 16 will be referred to as the "vertical direction or upper/lower direction", the sealing assembly 17 side will be referred to as "upper", and the bottom side of the outer can 16 will be referred to as "lower". Further, a direction perpendicular to the axial direction of the outer can 16 will be referred to as "horizontal direction or radial direction", the radially inner side of the outer can 16 will be referred to as "inner", and the radially outer side will be referred to as "outer".

The positive electrode 11 comprises a positive electrode core and a positive electrode mixture layer formed on at least one surface of the core. As the positive electrode core, it is possible to use: a foil of a metal, such as aluminum or an aluminum alloy, that is stable in the potential range of the positive electrode 11; a film having such a metal disposed on its surface layer; and the like. The positive electrode mixture layer contains a positive electrode active material, a conductive agent such as acetylene black, and a binder such as polyvinylidene fluoride, and is preferably formed on both sides of the positive electrode core. For example, a lithium transition metal composite oxide or the like is used as the positive electrode active material.

The negative electrode 12 comprises a negative electrode core and a negative electrode mixture layer formed on at least one surface of the core. As the negative electrode core, it is possible to use: a foil of a metal, such as copper or a copper alloy, that is stable in the potential range of the negative electrode 12; a film having such a metal disposed on its surface layer; and the like. The negative electrode mixture layer contains a negative electrode active material and a binder such as styrene-butadiene rubber (SBR), and is preferably formed on both sides of the negative electrode core. For example, graphite, a silicon-containing compound, or the like is used as the negative electrode active material.

The electrolyte may be an aqueous electrolyte or a non-aqueous electrolyte. Further, the electrolyte may be either a liquid electrolyte or a solid electrolyte. In the present embodiment, it is assumed that a non-aqueous electrolyte is used. The non-aqueous electrolyte contains a non-aqueous solvent and an electrolyte salt dissolved in the non-aqueous solvent. As the non-aqueous solvent, it is possible to use, for example, esters, ethers, nitriles, amides, and a mixed solvent containing two or more of the foregoing. The non-aqueous solvent may contain a halogen-substituted product obtained by substituting at least part of hydrogens in the above solvents with halogen atoms such as fluorine. A lithium salt such as LiPF₆, for example, is used as the electrolyte salt.

The cylindrical battery 10 comprises insulation plates 19, 20 respectively arranged above and below the electrode assembly 14. The outer can 16 is connected to one of the positive electrode 11 and the negative electrode 12, and the sealing assembly 17 is connected to the other one of the positive electrode 11 and the negative electrode 12. In the example shown in FIG. 1, a positive electrode lead 21 connected to the positive electrode 11 extends through a through hole in the insulation plate 19 and toward the sealing assembly 17, while a negative electrode lead 22 connected to the negative electrode 12 extends outside the insulation plate 20 and toward the bottom of the outer can 16. The positive electrode lead 21 is connected by welding or the like to an internal terminal plate 25, which is a bottom plate of the sealing assembly 17, and a rupture plate 26 of the sealing assembly 17 electrically connected to the internal terminal plate 25 serves as a positive electrode external terminal. The negative electrode lead 22 is connected by welding or the like to an inner surface of the bottom portion of the outer can 16, and the outer can 16 serves as a negative electrode external terminal. Here, it may be configured such that the negative electrode lead 22 is connected to an inner surface of the sealing assembly 17 while the positive electrode lead 21 is connected an inner surface of the outer can 16. In that case, the sealing assembly 17 serves as the negative electrode external terminal, and the outer can 16 serves as the positive electrode external terminal.

The outer can 16 is a metal container having an opening at one axial end (or upper end), a disk-shaped bottom portion, and a side surface formed in a cylindrical shape along the outer peripheral edge of the bottom portion. The sealing assembly 17 is formed in a disc shape corresponding to the shape of the opening of the outer can 16. The gasket 18 is an annular member made of resin, and allows to achieve airtightness inside the battery and electrical insulation between the outer can 16 and the sealing assembly 17.

The outer can 16 has a grooved portion 23 in which a part of the side surface protrudes inward from the outside. The grooved portion 23 is formed in an annular shape along the circumferential direction of the outer can 16 by performing spinning from the outside of the side surface. Further, the outer can 16 is such that an edge portion of the opening is bent outward, and an opening end portion 16a extends radially outward. As will be described in detail later, a pressing member 24 is joined to the opening end portion 16a, and the sealing assembly 17 is held between the pressing member 24 and the grooved portion 23. Furthermore, in the present embodiment, the pressing member 24 is electrically conductive.

The sealing assembly 17 is a disk-shaped member having a current cut-off mechanism. The sealing assembly 17 has a structure in which the internal terminal plate 25, an insulation plate 27, and the rupture plate 26 are laminated in this order from the electrode assembly 14 side. The internal terminal plate 25 is a metal plate that includes an annular portion 25a to which the positive electrode lead 21 is connected, and a thin central portion 25b which is detached from the annular portion 25a when the internal pressure of the battery exceeds a predetermined threshold value. A vent hole 25c is formed in the annular portion 25a.

The rupture plate 26 is arranged to face the internal terminal plate 25 across the insulation plate 27. The insulation plate 27 has an opening 27a formed at its radially central portion, and a vent hole 27b formed at a part overlapping the vent hole 25c of the internal terminal plate 25. The rupture plate 26 has a valve portion 26a that ruptures when the internal pressure of the battery exceeds a predetermined threshold value. The valve portion 26a is connected by welding or the like to the central portion 25b of the internal terminal plate 25 through the opening 27a of the insulation plate 27. The insulation plate 27 insulates parts other than the annular portion 25a and the connecting part between the valve portion 26a and the central portion 25b.

The valve portion 26a includes a downward protrusion protruding toward the inside of the battery and a thin portion formed around the downward protrusion, and is formed in the radially central portion of the rupture plate 26. In the cylindrical battery 10, the internal terminal plate 25 to which the positive electrode lead 21 is connected is electrically connected to the rupture plate 26, and a current path from the electrode assembly 14 to the rupture plate 26 is thereby formed. When an abnormality occurs in the battery and the internal pressure increases, the internal terminal plate 25 ruptures so that the central portion 25b is detached from the annular portion 25a, and the valve portion 26a is deformed to project upward in the battery. As a result, the current path is cut off. When the internal pressure of the battery increases further, the valve portion 26a ruptures to form a gas outlet.

The structure of the sealing assembly is not limited to the structure shown in FIG. 1. The sealing assembly may have a laminated structure including two valve members, and may have a convex sealing assembly cap covering the valve members.

The cylindrical battery 10 is, for example, provided in a plural number and connected in series to form a module. In a battery module including cylindrical batteries 10 according to the present embodiment, external leads are connected to the conductive pressing members 24 and the sealing assemblies 17 by welding or the like. By connecting the external leads to the pressing members 24, the distance of connection between the batteries can be reduced as compared to when the external leads are connected to the bottom portions of the outer cans 16.

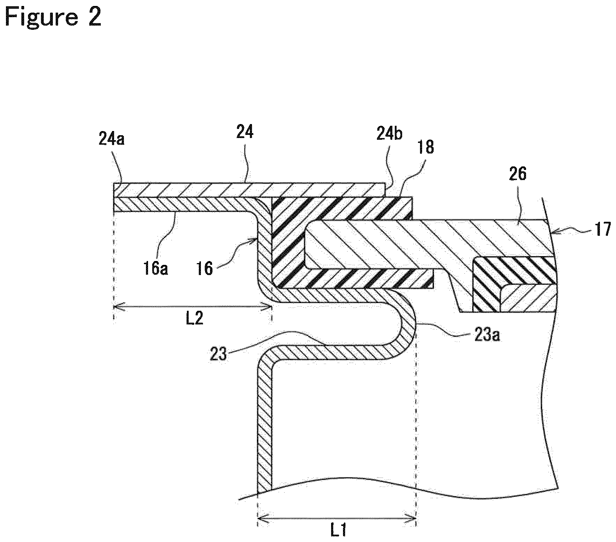

A structure for crimp fixation of the sealing assembly 17 at an upper end portion of the outer can 16 will now be described in detail by reference to FIG. 2. FIG. 2 is an enlarged view of a part of the upper end portion of the outer can of FIG. 1.

As shown in FIG. 2, the grooved portion 23 has a substantially U-shaped cross section, and supports the sealing assembly 17 on its upper surface. A length L1 of the grooved portion 23 is, for example, 0.5 to 3 mm. Here, the length L1 of the grooved portion 23 denotes a length along the radial direction of the outer can 16 from the side surface to an inner end 23a of the grooved portion 23. When the length L1 of the grooved portion 23 is within this range, the sealing assembly 17 can be stably supported while sufficient mechanical strength of the outer can 16 is obtained.

The opening end portion 16a is formed by bending outward the opening edge part (or upper end part) of the outer can 16, and extends substantially horizontally in the radially outward direction. A length L2 of the opening end portion 16a is, for example, 0.5 to 3 mm. Here, the length L2 of the opening end portion 16a denotes a length along the radial direction from the side surface to the end of the outer can 16. As with the grooved portion 23, the opening end portion 16a is formed in an annular shape along the circumferential direction of the outer can 16.

The pressing member 24 is a flat plate. The thickness of the pressing member 24 is, for example, 0.05 to 0.5 mm. One end part of the pressing member 24 is joined to the opening end portion 16a, and the other end part of the pressing member 24 presses a peripheral edge portion of the sealing assembly 17 from above via the gasket 18. The sealing assembly 17 is supported at its lower part by the grooved portion 23, and is fixed by being crimped between the pressing member 24 and the grooved portion 23. By employing a plate having high flatness and a large area as the pressing member 24, connection of an external lead to the pressing member 24 serving as the external terminal can be easily performed when modularizing the cylindrical battery 10. As a result, stability and workability of the connection between the outer can 16 and the external lead are improved.

Although no particular limitation is imposed on the position of an outer end 24a of the pressing member 24, the upper end of the outer can 16 and the outer end 24a may for example be substantially aligned as shown in FIG. 2. Alternatively, by positioning the outer end 24a outward from the upper end of the outer can 16, the area of the pressing member 24 is increased, and the stability and workability of the connection between the outer can 16 and the external lead are further improved. In cases where the outer end 24a is positioned near the side surface of the outer can 16 and the upper surface of the opening end portion 16a is exposed, the external lead can be connected to the opening end portion 16a.

No particular limitation is imposed on the position of an inner end 24b of the pressing member 24 so long as the pressing member 24 can press the sealing assembly 17 from above via the gasket 18 with an appropriate pressure. For example, as shown in FIG. 2, the inner end 24b may be positioned outward from the inner end 23a of the grooved portion 23.

The pressing member 24 is preferably made of metal. With this feature, the pressing member 24 can press the sealing assembly from above with an appropriate pressure while having good electrical conductivity.

The pressing member 24 may be a ring-shaped plate member. With this feature, the sealing assembly 17 can be pressed from above substantially uniformly along the circumferential direction of the outer can 16. The outer shape of the pressing member 24 has, for example, an outer diameter of ϕ 20 to 30 mm and a hollow cut hole of ϕ 15 to 20 mm.

As a method for joining the pressing member 24 and the opening end portion 16a, a welding method, a bonding method, or the like can for example be used. Examples of the welding method include laser welding and resistance welding, with laser welding being preferred. Examples of the bonding method include a method using an adhesive or solder. As the adhesive, one having electrical conductivity is preferred. Weldability may be improved by increasing surface roughness of the pressing member 24.

The material of the pressing member 24 is preferably identical to the main component of the material of the outer can 16. This feature facilitates joining of the pressing member 24 and the opening end portion 16a by laser welding. For example, the material of the pressing member 24 and the opening end portion 16a may be a steel plate material. Further, the surface of the steel plate material may for example be plated with nickel or the like.

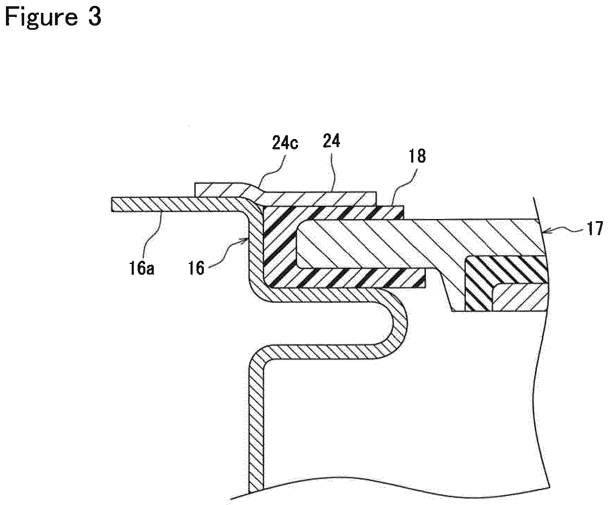

Further, as shown in FIG. 3, the pressing member 24 may have a bent portion 24c. FIG. 3 is a view corresponding to FIG. 2, showing another example embodiment. With this feature, the pressure by which the pressing member 24 presses the sealing assembly 17 can be increased, so that airtightness inside the battery is further enhanced. In FIG. 3, the external lead may be connected to the exposed upper surface of the opening end portion 16a, or may be connected to the surface of the pressing member 24.

Next, an example method of manufacturing the cylindrical battery 10 will be described by reference to FIG 1. First, press working is performed with respect to the bottomed cylindrical outer can 16 made of steel plate material with a 90° bent part formed near its upper end, and then the upper end is trimmed, thereby forming the opening end portion 16a extending radially outward at a length of 0.5 to 3 mm. Next, the insulation plates 19, 20 are arranged above and below the electrode assembly 14, and this arrangement is housed in the outer can 16. The negative electrode lead 22 is welded to the bottom portion of the outer can 16, and the grooved portion 23 is formed on the side surface of the outer can 16 by pressing. After that, the sealing assembly 17 is welded to the positive electrode lead 21, and an appropriate amount of the non-aqueous electrolyte is injected into the outer can 16. After the injection, the gasket 18 and the sealing assembly 17 are placed in a part above the grooved portion 23, and while compressing the gasket 18 with the inner end part of the ring-shaped pressing member 24, the pressing member 24 and the opening end portion 16a are laser-welded together. A cylindrical battery can thereby be produced.

As described above, in the cylindrical battery 10, the opening end portion 16a of the outer can 16 extends radially outward, and the sealing assembly 17 is fixed by being crimped, via the gasket 18, between the pressing member 24 joined to the opening end portion 16a and the grooved portion 23. According to the cylindrical battery 10, sufficient connection area for an external lead can be provided at the pressing member 24 or the opening end portion 16a, so that, when modularizing the cylindrical battery 10, stability and workability of connection between the outer can and the external lead are improved.

### REFERENCE SIGNS LIST

10 cylindrical battery, 11 positive electrode, 12 negative electrode, 13 separator, 14 electrode assembly, 16 outer can, 16a opening end portion, 17 sealing assembly, 18 gasket, 19, 20 insulation plate, 21 positive electrode lead, 22 negative electrode lead, 23 grooved portion, 23a inner end, 24 pressing member, 24a outer end, 24b inner end, 24c bent portion, 25 internal terminal plate, 25a annular portion, 25b central portion, 25c vent hole, 26 rupture plate, 26a valve portion, 27 insulation plate , 27a opening, 27b vent hole

## Claims

1. A cylindrical battery (10), comprising:
an electrode assembly (14) including a positive electrode (11) and a negative electrode (12);
a bottomed cylindrical outer can (16) which houses the electrode assembly (14) and which is connected to one of the positive electrode (11) and the negative electrode (12); and
a sealing assembly (17) connected to the other one of the positive electrode (11) and the negative electrode (12), **characterised in that**
the outer can (16) has a grooved portion (23), and an opening end portion (16a) extending radially outward, and
the sealing assembly (17) is fixed by being crimped, via a gasket (18), between a pressing member (24) joined to the opening end portion (16a) and the grooved portion (23).

2. The cylindrical battery (10) according to claim 1, wherein the pressing member (24) is made of metal.

3. The cylindrical battery (10) according to claim 1 or 2, wherein the pressing member (24) is a ring-shaped plate member.

4. The cylindrical battery (10) according to any one of claims 1 to 3, wherein material of the pressing member (24) is identical to a main component of material of the outer can (16).

## Patentansprüche

1. Zylindrische Batterie (10), umfassend:
eine Elektrodenanordnung (14), die eine Positivelektrode (11) und eine Negativelektrode (12) umfasst;
ein zylindrisches äußeres Gehäuse (16) mit Boden, das die Elektrodenanordnung (14) unterbringt und das mit einer von der Positivelektrode (11) und der Negativelektrode (12) verbunden ist; und
eine Dichtungsanordnung (17), die mit der anderen von der Positivelektrode (11) und der Negativelektrode (12) verbunden ist,
**dadurch gekennzeichnet, dass** das äußere Gehäuse (16) einen gerillten Abschnitt (23) und einen Öffnungsendabschnitt (16a) aufweist, der sich radial nach außen erstreckt, und
die Dichtungsanordnung (17) mittels Crimpens über einen Dichtring (18) zwischen einem Drückelement (24), das mit dem Öffnungsendabschnitt (16a) verbunden ist, und dem gerillten Abschnitt (23) befestigt ist.

2. Zylindrische Batterie (10) nach Anspruch 1, wobei das Drückelement (24) aus Metall besteht.

3. Zylindrische Batterie (10) nach Anspruch 1 oder 2, wobei das Drückelement (24) ein ringförmiges Plattenelement ist.

4. Zylindrische Batterie (10) nach einem der Ansprüche 1 bis 3, wobei Material des Drückelements (24) identisch mit einer Hauptkomponente von Material des äußeren Gehäuses (16) ist.

## Revendications

1. Batterie cylindrique (10) comprenant :
un ensemble d'électrodes (14) comprenant une électrode positive (11) et une électrode négative (12) ;
une boîte externe cylindrique à fond (16) qui loge l'ensemble d'électrodes (14) et qui est raccordée à l'une parmi l'électrode positive (11) et l'électrode négative (12) ; et
un ensemble d'étanchéité (17) raccordé à l'autre parmi l'électrode positive (11) et l'électrode négative (12),
**caractérisée en ce que** la boîte externe (16) a une partie rainurée (23) et une partie d'extrémité d'ouverture (16a) s'étendant radialement vers l'extérieur, et
l'ensemble d'étanchéité (17) est fixé en étant serti, via un joint (18), entre un élément de pression (24) assemblé à la partie d'extrémité d'ouverture (16a) et la partie rainurée (23).

2. Batterie cylindrique (10) selon la revendication 1, dans laquelle l'élément de pression (24) est en métal.

3. Batterie cylindrique (10) selon la revendication 1 ou 2, dans laquelle l'élément de pression (24) est un élément de plaque de forme annulaire.

4. Batterie cylindrique (10) selon l'une quelconque des revendications 1 à 3, dans laquelle le matériau de l'élément de pression (24) est identique à un composant principal de matériau de la boîte externe (16).
